# EUROPÄISCHE PATENTSCHRIFT

(11) **EP 2 018 303 B1**
(45) Veröffentlichungstag und Bekanntmachung des Hinweises auf die Patenterteilung: **27.01.2010**
(21) Anmeldenummer: 07727124.5
(22) Anmeldetag: 20.03.2007
(51) Int. Cl.: B60T 8/36

(54) **HYDRAULISCHE BREMSANLAGE**
HYDRAULIC BRAKING SYSTEM
DISPOSITIF DE FREINAGE HYDRAULIQUE

(30) Priorität: 05.05.2006 DE 102006020890
(43) Veröffentlichungstag der Anmeldung: 28.01.2009
(73) Patentinhaber: Robert Bosch GmbH, 70442 Stuttgart (DE)
(72) Erfinder: WEH, Andreas, 87477 Sulzberg (DE); MAYR, Matthias, 87549 Rettenberg (DE)
(86) Internationale Anmeldenummer: PCT/EP2007/052647
(87) Internationale Veröffentlichungsnummer: WO 2007/128616

(56) Entgegenhaltungen:
- EP-A1- 0 992 731
- WO-A-02/053435
- DE-A1- 4 431 250
- DE-A1- 10 020 902
- DE-A1- 19 805 843

## Beschreibung

### Stand der Technik

Die Erfindung geht aus von einer hydraulischen Bremsanlage mit einer Vorrichtung zur Regelung des Bremsschlupfs, des Antriebschlupfs und/oder der Fahrstabilität eines mit dieser hydraulischen Bremsanlage ausgestatteten Fahrzeugs. Derartige Bremsanlagen sind am Markt auch unter den Begriffen Bremsanlagen mit Antiblockierschutzregelung (ABS), Antriebschlupfregelung (ASR) oder mit elektronischem Stabilitätsprogramm (ESP) hinlänglich bekannt. Sie verhindern durch gezieltes Regeln des Bremsdrucks in den verschiedenen Radbremsen Schlupf an den zugeordneten Rädern des Fahrzeugs während unterschiedlicher Fahrsituationen und ermöglichen es dadurch, dass das Fahrzeug lenkbar und für den Fahrer beherrschbar bleibt. Dementsprechend leisten derartige Bremsanlagen einen wesentlichen Beitrag zur Verkehrssicherheit.

Herzstück derartiger Bremsanlagen bildet ein zwischen einem Hauptbremszylinder und den Radbremsen geschaltetes Hydraulikaggregat mit einem Hydraulikblock, an dem zur Bremsdruckregelung verschiedene hydraulische Komponenten, wie beispielsweise Pumpen, Ventile und/oder Speicher, angeordnet sind. Ein entsprechender Hydraulikblock mit einem angebautem elektronischen Steuergerät zur bedarfsweisen Betätigung der Ventile und einem Elektromotor zum Antrieb der Pumpen ist beispielsweise aus der DE 44 31 250 A1 bereits bekannt. Zur Aufnahme der hydraulischen Komponenten weist dieser bekannte Hydraulikblock Einbauräume auf, die entsprechend eines der Fahrzeugbremsanlage zugrunde liegenden Hydraulikschaltplans miteinander kommunizieren. Dieser Hydraulikschaltplan ist anhand von Kanälen, welche den Hydraulikblock durchziehen, mechanisch umgesetzt. Eine mögliche mechanische Umsetzung eines Hydraulikschaltplans lässt sich insbesondere der Figur 5 der oben genannten Offenlegungsschrift entnehmen.

Bei dieser Umsetzung des Hydraulikschaltplans in das Bohrbild des Hydraulikblocks ist darauf zu achten, zwecks einer guten Regeldynamik der Fahrzeugbremsanlage mit einer möglichst geringen Anzahl von möglichst kurz und direkt geführten Kanälen auszukommen. Die hierfür notwendige Zerspanungsarbeiten sollten aus Kostengründen nur wenige Umspannvorgänge des Hydraulikblocks während des Bearbeitungsprozesses erfordern. Zudem bestehen Anforderungen an das Bohrbild hinsichtlich interner Druckdichtheit und sich ergebendem Betriebsgeräusch. Nachvollziehbarer Weise ist es im Fahrzeugbau ferner von besonderer Bedeutung, dass der Hydraulikblock ein möglichst geringes Gewicht bei kompakten Außenabmessungen aufweist.

### Offenbarung der Erfindung

### Vorteile der Erfindung

Ein Gegenstand mit den Merkmalen des Anspruchs 1 weist den Vorteil auf, dass der eingesetzte Hydraulikblock äußerst wenig Bauraum einnimmt und besonders leicht zerspanbar ist. Infolge seiner Kompaktheit weist der Hydraulikblock zudem ein geringes Gewicht auf. Diese Vorteile basieren unter anderem auf einer erfindungsgemäßen Anordnung bzw. einer erfindungsgemäßen Führung der Kanäle im Hydraulikblock. Die vorgeschlagene Kanalführung wird durch ein multifunktionales Verschlusselement ermöglicht, das zusätzlich zu seiner Verschlussfunktion dem Zweck dient, eine Kanalverbindung, welche lediglich aus fertigungstechnischer Sicht sinnvoll ist, aber im Hydraulikschaltplan nicht vorgesehenen ist, zu sperren. Besagte Kanalverbindung verbindet die Einbauräume zweier im Hydraulikschaltplan nicht miteinander kommunizierender Ventile.

Weitere Vorteile oder vorteilhafte Weiterbildungen der Erfindung ergeben sich aus den Unteransprüchen und der nachfolgenden Beschreibung. Anspruch 2 definiert diejenigen Ventile über ihre Funktion innerhalb der hydraulischen Fahrzeugbremsanlage, deren Einbauräume sich für die erfindungsgemäße Verschaltung besonders eignen. Gemäß Anspruch 3 lassen sich die beiden Ventile nunmehr parallel und ohne Höhenversatz zueinander in einer Reihe am Hydraulikblock anordnen. Dies ist für das geringe Bauvolumen des Hydraulikblocks mitbestimmend. Als Verschlusselement lässt sich vorzugsweise ein als Massenware am Markt erhältlicher Stift mit zylindrischem Querschnitt verwenden, welcher beispielsweise in den erwähnten, als Bohrung ausgebildeten Kanal einpressbar ist (Ansprüche 7 und 8).

### Zeichnung

Ein Ausführungsbeispiel der Erfindung ist in der Zeichnung dargestellt und in der anschließenden Beschreibung näher erläutert. Die Zeichnung umfasst insgesamt 3 Figuren, wobei Figur 1 einen für das Verständnis der Erfindung notwendigen Teil des Hydraulikschaltplans einer hydraulischen Bremsanlage zeigt. Figur 2 stellt in einer perspektivischen Ansicht den Hydraulikblock einer solchen Bremsanlage dar. Schließlich ist in Figur 3 noch der eigentliche Kern der Erfindung anhand eines Längsschnitts durch den hierfür maßgeblichen Teil des Hydraulikblocks dargestellt.

### Beschreibung des Ausführungsbeispiels

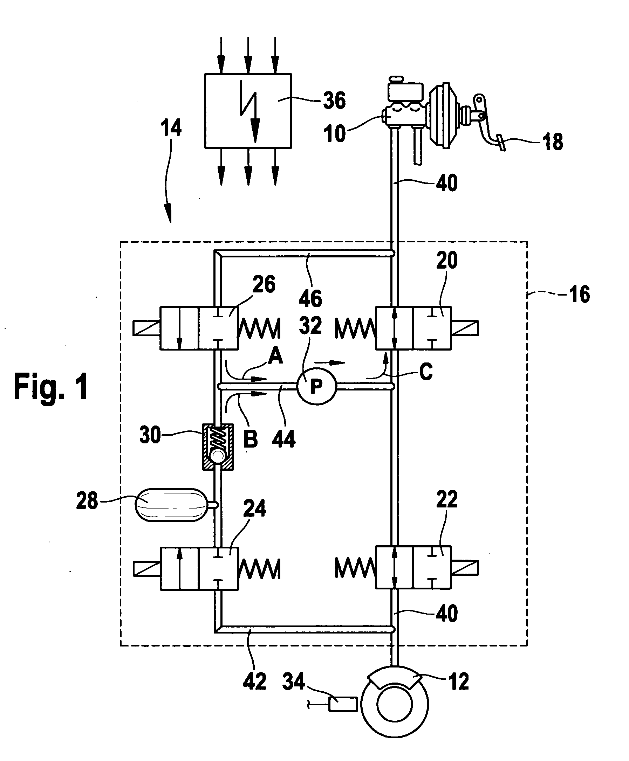

Wie bereits erwähnt, zeigt Figur 1 einen Teil des Hydraulikschaltplans einer hydraulischen Fahrzeugbremsanlage. Dieser Hydraulikschaltplan umfasst einen Hauptbremszylinder 10 zur Beaufschlagung einer Radbremse 12 mit Bremsdruck sowie eine zwischen dem Hauptbremszylinder 10 und die Radbremse 12 geschaltete Vorrichtung zur Regelung dieses Bremsdrucks 14 in Abhängigkeit des Radschlupfs an einem zugeordneten Rad des Fahrzeugs. Die Vorrichtung zur Regelung des Bremsdrucks 14 mit ihren verschiedenen hydraulischen Komponenten weist einen Hydraulikblock 16 auf, der in Figur 1 anhand einer gestrichelten Linie symbolisch dargestellt ist. Bei den einzelnen Komponenten der Vorrichtung 14 handelt es sich um insgesamt vier elektromagnetisch ansteuerbare Ventile 20 bis 26, einen Speicher 28, ein mechanisch arbeitendes Rückschlagventil 30, eine Pumpe 32 und druckmittelführende, diese Komponenten zu einem Hydraulikkreis verbindende Leitungen 40 bis 46.

Eine erste Leitung 40 verläuft vom Hauptbremszylinder 10 zur Radbremse 12. In ihr ist als erstes Ventil stromabwärts des Hauptbremszylinders 10 ein so genanntes Umschaltventil 20 angeordnet. Dieses Umschaltventil 20 nimmt in seiner Grundstellung eine Durchgangsstellung ein und lässt sich durch elektrische Ansteuerung in eine Sperrstellung umschalten. Im angesteuerten Zustand ist die Druckmittelverbindung vom Hauptbremszylinder 10 zur Radbremse 12 unterbrochen. Weiter stromabwärts des Umschaltventils 20 befindet sich ein weiteres normal offenes Ventil, das im Folgenden als Einlassventil 22 bezeichnet wird. Das Einlassventil 22 ist unmittelbar mit der Radbremse 12 verbunden und kann elektromagnetisch in eine Sperrstellung umgeschaltet werden.

Zwischen diesem Einlassventil 22 und der Radbremse 12 zweigt eine zweite Leitung 42 (Rücklauf) ab, in der ein normal geschlossenes Auslassventil 24 angeordnet ist. Dieses Auslassventil 24 steuert eine Verbindungsleitung 44 von der Radbremse 12 zum Einlass der Pumpe 32, wobei zwischen dem Auslassventil 24 und der Pumpe 32 noch ein Speicher 28 sowie, dem Speicher 28 nachgeordnet, ein in Richtung der Pumpe 32 öffnendes Rückschlagventil 30 angeordnet sind. Das Rückschlagventil 30 gewährleistet, dass Druckmittel lediglich vom Speicher 28 zur Pumpe 32, aber nicht zurück, strömen kann.

In einer Leitung 46, die vom Hauptbremszylinder 10 zum Einlass der Pumpe 32 führt, befindet sich ein viertes Ventil, das als Hochdruckschaltventil 26 bezeichnet ist. Dieses Hochdruckschaltventil 26 ist in seiner Grundstellung geschlossen und ermöglicht es, im Falle seiner Ansteuerung, die Pumpe 32 bei Bedarf mit Druckmittel aus dem Hauptbremszylinder 10 zu versorgen. Die Druckseite der Pumpe 32 mündet zwischen dem Umschaltventil 20 und dem Einlassventil 22 in die erste Leitung 40 vom Hauptbremszylinder 10 zur Radbremse 12 ein.

Die Funktion dieses Hydraulikkreises ist an sich bekannt und soll daher im Folgenden nur grob erläutert werden:

Während des Normalbetriebs der Bremsanlage ist der ersten Leitung 40 vom Hauptbremszylinder 10 zur Radbremse 12 offen, das Umschaltventil 20 und das Einlassventil 22 nehmen ihre Grundstellung ein. Durch Betätigung des Bremspedals 18 vom Fahrer kann Bremsdruck in der Radbremse 12 aufgebaut werden. Wird während des Bremsvorgangs Schlupf an dem der Radbremse 12 zugeordneten Rad des Fahrzeugs detektiert, erfolgt die Ansteuerung des Umschaltventils 20, welches daraufhin die Verbindung des Hauptbremszylinders 10 mit der Radbremse 12 unterbricht. Gleichzeitig läuft die Pumpe 32 an, das Einlassventil 22 wird geschlossen und das Auslassventil 24 geöffnet. Die Pumpe 32 kann dadurch Druckmittel aus der Radbremse 12 absaugen und eine Absenkung des Bremsdrucks in der Radbremse 12 einleiten. Sobald der bestehende Schlupf abgebaut ist, kann der Bremsdruck an der Radbremse 12 wieder aufgebaut werden. Dazu fördert die Pumpe 32 das Druckmittel zwischen Umschaltventil 20 und Einlassventil 22 zurück in die erste Leitung 40. Der Speicher 28 hält Druckmittel vor und stellt das Anlaufen der Pumpe 32 sicher.

Im Falle einer notwendigen Bremsdruckerhöhung kann das Hochdruckschaltventil 26 elektromagnetisch geöffnet werden, so dass die Pumpe 32 zusätzliches Druckmittel aus dem Hauptbremszylinder 10 ansaugen und zum Einlassventil 22 fördern kann. Das nur in eine Richtung durchströmbare Rückschlagventil 30 gewährleistet dabei, dass kein vom Hauptbremszylinder 10 kommendes Druckmittel durch ein eventuell noch geöffnetes Auslassventil 24 zur Radbremse 12 gelangt. Durch wechselweises Öffnen und Schließen des Einlassventils 22 bzw. des Auslassventils 24 in Verbindung mit der Betätigung der Pumpe 32 lässt sich somit der Bremsdruck in der Radbremse 12 regulieren.

Falls im Falle eines Beschleunigungsvorgangs des Fahrzeugs an den angetriebenen Rädern Schlupf auftreten sollte, so kann durch ein Schließen des Umschaltventils 20 der Hauptbremszylinder 10 von der Radbremse 12 abgekoppelt werden. Mit einem gleichzeitigen Anlauf der Pumpe 32 kann unabhängig vom Fahrer Druckmittel über das geöffnete Einlassventil 22 zur Radbremse 12 gefördert und dort ein Bremsdruck aufgebaut werden. Mit anderen Worten lässt sich das betroffene angetriebene Rad gezielt abbremsen und so der Antriebschlupf beseitigen.

Ebenso kann im Falle eines drohenden instabilen Fahrzustands ohne Mitwirkung des Fahrers eines oder mehrere Räder das Fahrzeug abgebremst werden, um das Fahrzeug zu stabilisieren. Zur Detektion auftretenden Radschlupfs sind die einzelnen Räder mit fahrzeugseitigen Drehzahl messenden Sensoren 34 ausgestattet. Eine Auswertung der von diesen Sensoren 34 gelieferten Signale erfolgt im elektronischen Steuergerät 36. Dieses Steuergerät verarbeitet die eingehenden Signale zu Ansteuersignalen für die erläuterten Ventile 20 bis 26 weiter.

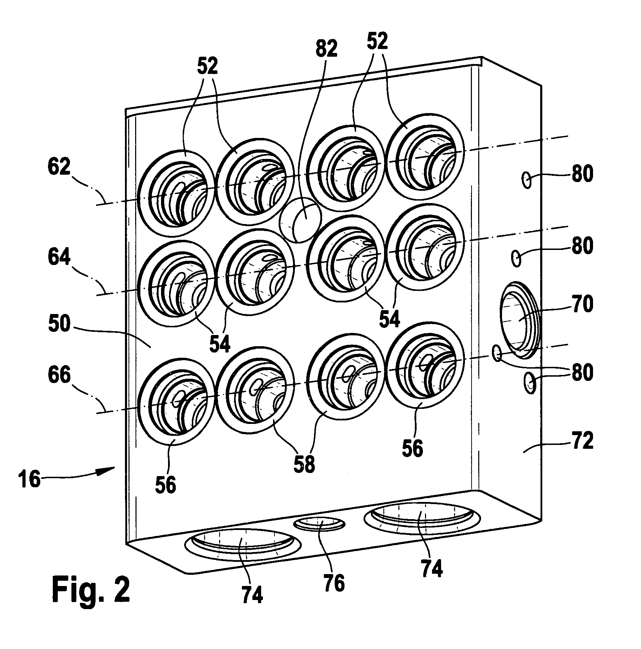

Figur 2 zeigt in dreidimensionaler Darstellung den Hydraulikblock 16 in Einbaulage. Dieser Hydraulikblock 16 verfügt über mehrere der in Figur 1 dargestellten Hydraulikkreise. Er besteht aus einem quaderförmigen Metallteil 50, in das durch spannende Bearbeitungsprozesse unter anderem Einbauräume 52 bis 58 für die verschiedenen Ventile 20 bis 26 ausgebildet sind. Jeweils vier Einbauräume 52 bis 58 sind parallel nebeneinander in drei Reihen 62 - 66 angeordnet, die auf unterschiedlichen Höhen der Vorderseite des Hydraulikblocks 50 verlaufen. Die obere Reihe 62 von Einbauräumen 52 ist zur Aufnahme der Auslassventile 24 der Hydraulikkreise bestimmt, die mittlere Reihe 64 nimmt die Einlassventile 22 der Hydraulikkreise auf und in der unteren Reihe 66 dienen die außen liegenden Einbauräume 56 zur Aufnahme der Umschaltventile 20 und die inneren Einbauräume 58 zur Aufnahme der Hochdruckschaltventile 26. Die untere Reihe 66 der Einbauräumen 56, 58 ist gegenüber der mittleren Reihe 64 weiter beabstandet als diese mittlere Reihe 64 von der oberen Reihe 62. Dadurch wird im Hydraulikblock 50 Platz geschaffen zum Vorsehen von Einbauräumen 70 für die Pumpen 32. Diese Einbauräume 70 verlaufen im rechten Winkel zu den Einbauräumen 52 bis 58 der Ventile 20 bis 26 und gehen von den Seitenflächen 72 des Hydraulikblocks 16 aus. Figur 2 zeigt lediglich den Einbauraum 70 einer einzelnen Pumpe 32, der gegenüberliegende Einbauraum einer zweiten Pumpe ist in dieser Ansicht nicht zu erkennen. Weitere Einbauräume 74 zur Aufnahme der Speicher 28 der Hydraulikkreise verlaufen von der Unterseite 76 senkrecht nach oben in den Hydraulikblock 16 hinein.

Die aufgezählten Einbauräume 52 bis 58, 70, 74 sind durch druckmittelführende Kanäle miteinander zu den Hydraulikkreisen verbunden. Die Kanäle sind durch Bohrungen 80 spanend in den Hydraulikblock 16 eingebracht. Vier dieser druckmittelführenden Bohrungen 80 nehmen ihren Anfang an der in Figur 2 sichtbaren Seitenfläche 72 des Hydraulikblocks 16. Beim einsatzbereiten Hydraulikaggregat sind diese Bohrungen des Hydraulikblocks 16 durch Verschlusselemente zur Umgebung hin abgedichtet. Eine weitere Bohrung 82 im Hydraulikblock 16 ist zwischen den beiden oberen Reihen 62 und 64 von Einbauräumen 52, 54 angeordnet. Sie geht von der Vorderseite des Hydraulikblocks 16 zur Rückseite durch und dient der Durchführung von elektrischen Leitungen, welche einen auf der abgewandten Rückseite befestigbaren Elektromotor mit dem auf der sichtbaren Vorderseite anbringbaren elektronischen Steuergerät 36 kontaktiert. Über den Elektromotor erfolgt der Antrieb eines vorzugsweise verwendeten Exzenters, der in das Innere des Hydraulikblocks 16 von der Rückseite her einbaubar ist. Dieser in Figur 2 nicht erkennbare Exzenter zwingt den Pumpen 32 eine hin und hergehende Hubbewegung auf.

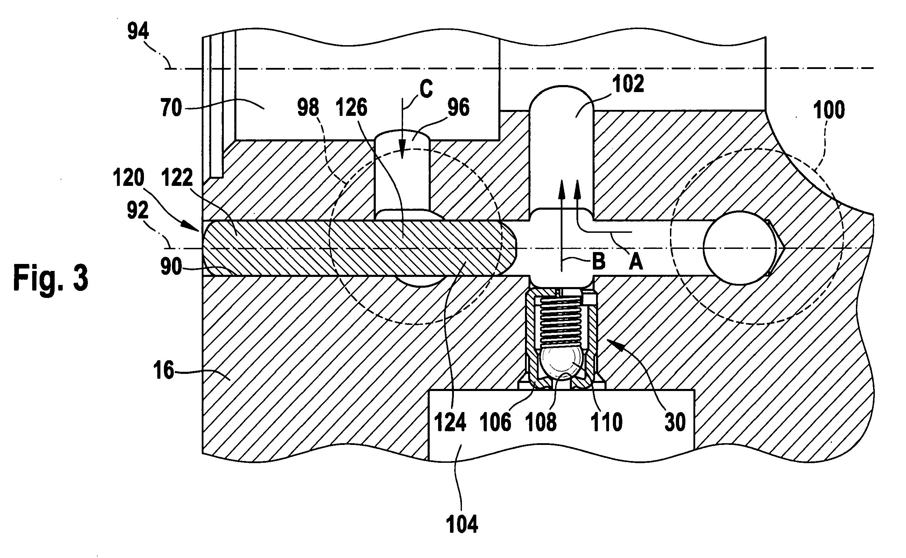

Figur 3 zeigt einen Ausschnitt des Hydraulikblocks 16 im Längsschnitt. Es ist ein erster Kanal 90 zu erkennen, der in Form einer Sacklochbohrung ausgeführt ist und der an einer in Figur 3 linken Außenseite des Hydraulikblocks 16 beginnt. Dieser erste Kanal 90 ist unterhalb eines Einbauraums 70 für eine Pumpe 32 angeordnet. Seine Längsachse 92 verläuft parallel zur Längsachse 94 dieses Einbauraums 70. Mit seitlichem Abstand zur linken Außenseite des Hydraulikblocks 16 verläuft ein zweiter Kanal 96 senkrecht zur Längsachse des Einbauraums 70. Dieser zweite Kanal 96 stellt eine Verbindung zwischen der Druckseite der Pumpe 32 und dem ersten Kanal 90 her. Im Bereich der Mündungsstelle des zweiten Kanals 96 in den ersten Kanal 90 befindet sich der erste Einbauraum 98 für das Ventil 20. Dieser Einbauraum 98 ist lediglich anhand einer gestrichelten Linie angedeutet, weil sein Querschnitt sich von der Rückseite des Hydraulikblocks 16 her erstreckt. Dieser Einbauraum 98 ist zur Aufnahme des Umschaltventils 20 vorgesehen und ist mit dem ersten Kanal 90 ebenfalls kontaktiert. Ein zweiter Einbauraum 100 befindet sich parallel versetzt und auf gleicher Höhe zum ersten Einbauraum 98 angeordnet weiter innen am Hydraulikblock 16. Dieser Einbauraum 100 nimmt das Hochdruckschaltventil 26 auf und ist hydraulisch ebenfalls an den ersten Kanal 90 angeschlossen. Zwischen beiden Einbauräumen 98 und 100 der Ventile 20, 26 ist ein dritter, parallel zum zweiten Kanal 96 verlaufender Kanal 102 eingezeichnet. Dieser dritte Kanal 102 mündet an seinem einen Ende in einen Einbauraum 104 für den Speicher 28 und ist dazu gegenüber liegend mit einem saugseitigen Bereich des Einbauraums 70 der Pumpe 32 verbunden. Auf dem Weg vom Einbauraum 70 der Pumpe 32 zum Einbauraum 104 des Speichers 28 kreuzt der dritte Kanal 102 den ersten Kanal 90. Kurz vor dem Einbauraum des Speichers 28 befindet sich in der Bohrung 102 das Rückschlagventil 30. Dieses erlaubt lediglich einen Druckmittelfluss aus dem Speicher 28 heraus in den ersten Kanal 90 hinein und sperrt die Gegenrichtung ab. Dazu verfügt das Rückschlagventil 30 über einen Ventilsitzkörper 106 mit einem daran ausgebildeten Ventilsitz 108. Der Ventilsitz 108 wirkt mit einem Schließkörper 110 zusammen, welcher hierfür von einer Druckfeder 112 gegen den Ventilsitz 108 gedrückt wird. Diese Druckfeder 112 ist zwischen dem Ventilsitzkörper 106 und dem Schließkörper 110 eingespannt.

In den ersten Kanal 90 ist ein Verschlusselement 120, hier beispielsweise in Form eines zylindrischen Stifts ausgeführt, eingepresst. Dieser zylindrische Stift erstreckt sich von der Außenseite des Hydraulikblocks 16 her bis über die Mündungsstelle des zweiten Kanals 96 in den ersten Kanal 90 sowie bis über die Mündungsstelle des Einbauraums 98 in den ersten Kanal 90 hinaus. Das Verschlusselement 120 hat einen der Außenseite des Hydraulikblocks 16 zugewandten ersten äußeren Dichtungsabschnitt 122. Diesem kommt die Funktion zu, den ersten Kanal 90 zur Umgebung hin zu verschließen. Dem äußeren Dichtungsabschnitt 122 liegt ein zweiter innen liegender Dichtungsabschnitt 124 gegenüber. Dieser sperrt eine im Hydraulikschaltplan nicht benötigte Druckmittelverbindung vom Einbauraum 70 der Pumpe 32 bzw. vom Einbauraum 98 des ersten Ventils 20 zum Einbauraum des Hochdruckschaltventils 26 ab. Der zweite Kanal 96, verlaufend von einem druckseitigen Teil des Einbauraums 70 der Pumpe 32 zum ersten Kanal 90, und der Einbauraum 98 des ersten Ventils 20 sind hydraulisch miteinander verbunden. Dies wird durch Strömungsquerschnitte erreicht, die größer dimensioniert sind als der Querschnitt des ersten Kanals 90. Der die Mündungsstellen durchdringende zylindrische Stift weist dadurch einen zwischen seinen beiden Dichtungsabschnitten 122, 124 liegenden und vom Druckmittel umströmen Mittenabschnitt 126 auf.

Die einander entsprechenden Druckmittelverbindungen im Hydraulikschaltplan nach Figur 1 und in seiner mechanischen Umsetzung nach Figur 3 sind in den entsprechenden Figuren mittels Richtungspfeilen veranschaulicht. Diese Richtungspfeile tragen die Großbuchstaben A bis C.

Selbstverständlich sind Änderungen oder Ergänzungen am beschriebenen Ausführungsbeispiel möglich, ohne vom erläuterten Grundgedanken der Erfindung abzuweichen.

## Patentansprüche

1. Hydraulische Bremsanlage mit einer Vorrichtung (14) zur Regelung des Bremsschlupfs, des Antriebschlupfs und/oder der Fahrstabilität eines Fahrzeugs, mit einem Hydraulikblock (16), der Einbauräume (52 bis 58, 70, 74, 98, 100) für hydraulische Komponenten, wie beispielsweise Pumpen (32), Ventile (20 bis 26), und/oder Speicher (28), aufweist, der mit externen Einrichtungen, wie beispielsweise einem Hauptbremszylinder (10) oder mit Radbremszylindern (12) kontaktierbar ist und der druckmittelführende Kanäle aufweist, welche die Komponenten entsprechend einer der Fahrzeugbremsanlage zugrunde liegenden hydraulischen Schaltung miteinander kontaktiert, **gekennzeichnet durch**
einen ersten Kanal (90), der einen ersten Einbauraum (98) eines ersten Ventils (20) mit einem zweiten Einbauraum (100) eines zweiten Ventils (26) verbindet und der an einer Außenfläche des Hydraulikblocks (16) ausmündet,
**durch** einen zweiten Kanal (96), der in den ersten Kanal (90) einmündet und
**durch** ein Verschlusselement (120),
das in den ersten Kanal (90) eingesetzt ist,
das einen ersten Dichtungsabschnitt (122) aufweist, der den ersten Kanal (90) nach außen druckmitteldicht verschließt,
das einen dem ersten Dichtungsabschnitt (122) gegenüberliegenden zweiten Dichtungsabschnitt (124) aufweist,
der jenseits einer Mündungsstelle des zweiten Kanals (96) in dem ersten Kanal (90) liegt und eine Verbindung des ersten Einbauraums (98) bzw. des zweiten Kanals (96) mit dem zweiten Einbauraum (100) sperrt und
das einen zwischen dem ersten und dem zweiten Dichtungsabschnitt (122, 124) liegenden, von Druckmittel umspülten Mittenabschnitt (126) aufweist.

2. Hydraulische Bremsanlage nach Anspruch 1, **dadurch gekennzeichnet,**
**dass** das Ventil (20) eine Leitung (40) steuert, die von einem an den Hydraulikblock (16) angeschlossenen Hauptbremszylinder (10) zu einer ebenfalls angeschlossenen Radbremse (12) führt und dass das zweite Ventil (26) einen Kanal (46) steuert, der vom Hauptbremszylinder (10) zu einer Saugseite der Pumpe (32) führt.

3. Hydraulische Bremsanlage nach Anspruch 1 oder 2, **dadurch gekennzeichnet,**
**dass** die ersten und zweiten Einbauräume (98, 100) der Ventile (20, 26) parallel zueinander ausgerichtet sind und auf annähernd gleicher Höhe am Hydraulikblock (16) in einer Reihe (66) angeordnet sind.

4. Hydraulische Bremsanlage nach einem der Ansprüche 1 bis 3, **dadurch gekennzeichnet, dass** die Kanäle (90) und (96) im Wesentlichen senkrecht zueinander verlaufen.

5. Hydraulische Bremsanlage nach Anspruch 4, **dadurch gekennzeichnet, dass** der Kanal (90) parallel zur Längsachse (94) eines Einbauraums (70) für eine Pumpe (32) verläuft und als Sacklochbohrung ausgebildet ist.

6. Hydraulische Bremsanlage nach einem der Ansprüche 1 bis 5, **dadurch gekennzeichnet, dass** zwischen der Mündungsstelle des Kanals (96) in den Kanal (90) und der Mündungsstelle des zweiten Einbauraums (100) des zweite Ventils (26) ein dritter Kanal (102) vorgesehen ist, der einen Speicher (28) mit dem Einbauraum (70) der Pumpe (32) verbindet.

7. Hydraulische Bremsanlage nach einem der Ansprüche 1 bis 6, **dadurch gekennzeichnet, dass** das Verschlusselement (120) in den Kanal (90) eingepresst ist.

8. Hydraulische Bremsanlage nach einem der Ansprüche 1 bis 7, **dadurch gekennzeichnet, dass** das Verschlusselement (120) ein Stift mit zylindrischem Querschnitt ist.

## Claims

1. Hydraulic brake system having an apparatus (14) for regulating the brake slip, the drive slip and/or the driving stability of a vehicle, having a hydraulic block (16) which has installation spaces (52 to 58, 70, 74, 98, 100) for hydraulic components, such as pumps (32), valves (20 to 26) and/or accumulators (28), can be brought into contact with external devices, such as a brake master cylinder (10) or with wheel brake cylinders (12), and has channels which route pressure medium and which make contact with the components according to a hydraulic connection to one another, on which hydraulic connection the vehicle brake system is based, **characterized by**
a first channel (90) which connects a first installation space (98) of a first valve (20) to a second installation space (100) of a second valve (26) and which opens at an outer face of the hydraulic block (16),
by a second channel (96) which opens into the first channel (90), and
by a closure element (120),
which closure element (120) is inserted into the first channel (90),
which closure element (120) has a first sealing section (122) which closes the first channel (90) to the outside in a pressure medium-tight manner,
which closure element (120) has a second sealing section (124) which lies opposite the first sealing section (122), lies in the first channel (90) on the other side of an opening point of the second channel (96) and shuts off a connection of the first installation space (98) or the second channel (96) to the second installation space (100), and
which closure element (120) has a central section (126) which lies between the first and the second sealing section (122, 124) and around which pressure medium flows.

2. Hydraulic brake system according to Claim 1, **characterized in that** the valve (20) controls a line (40) which leads from a brake master cylinder (10) which is connected to the hydraulic block (16) to a likewise connected wheel brake (12), and **in that** the second valve (26) controls a channel (46) which leads from the brake master cylinder (10) to a suction side of the pump (32).

3. Hydraulic brake system according to Claim 1 or 2, **characterized in that** the first and second installation spaces (98, 100) of the valves (20, 26) are oriented parallel to one another and are arranged in a row (66) at approximately the same height on the hydraulic block (16).

4. Hydraulic brake system according to one of Claims 1 to 3, **characterized in that** the channels (90) and (96) extend substantially perpendicularly with respect to one another.

5. Hydraulic brake system according to Claim 4, **characterized in that** the channel (90) extends parallel to the longitudinal axis (94) of an installation space (70) for a pump (32) and is configured as a blind bore.

6. Hydraulic brake system according to one of Claims 1 to 5, **characterized in that** a third channel (102) which connects an accumulator (28) to the installation space (70) of the pump (32) is provided between the opening point of the channel (96) into the channel (90) and the opening point of the second installation space (100) of the second valve (26).

7. Hydraulic brake system according to one of Claims 1 to 6, **characterized in that** the closure element (120) is pressed into the channel (90).

8. Hydraulic brake system according to one of Claims 1 to 7, **characterized in that** the closure element (120) is a pin with a cylindrical cross section.

## Revendications

1. Système de freinage hydraulique avec un dispositif (14) pour la régulation du glissement de freinage, du glissement d'entraînement et/ou de la stabilité de conduite d'un véhicule, avec un bloc hydraulique (16), qui présente des espaces de montage (52 à 58, 70, 74, 98, 100) pour des composants hydrauliques comme des pompes (32), des soupapes (20 à 26), et/ou des accumulateurs (28), qui peut être amené en contact avec des dispositifs externes comme un cylindre de freinage principal (10) ou des cylindres de frein de roue (12), et qui présente des canaux de fluide de pression, qui mettent en contact les composants en fonction d'un branchement hydraulique à la base du système de freinage du véhicule,
**caractérisé par**
un premier canal (90) qui relie un premier espace de montage (98) d'une première soupape (20) à un deuxième espace de montage (100) d'une deuxième soupape (26), et qui débouche au niveau d'une face extérieure du bloc hydraulique (16),
un deuxième canal (96), qui débouche dans le premier canal (90) et
un élément de fermeture (120),
qui est inséré dans le premier canal (90),
qui présente une première portion d'étanchéité (122) qui ferme le premier canal (90) vers l'extérieur de manière étanche au fluide de pression,
qui présente une deuxième portion d'étanchéité (124) opposée à la première portion d'étanchéité (122),
qui se situe de chaque côté d'un point d'embouchure du deuxième canal (96) dans le premier canal (90) et qui bloque une connexion du premier espace de montage (98) ou du deuxième canal (96) au deuxième espace de montage (100), et
qui présente une portion centrale (126) autour de laquelle circule du fluide de pression, située entre la première et la deuxième portion d'étanchéité (122, 124).

2. Système de freinage hydraulique selon la revendication 1, **caractérisé en ce que**
la soupape (20) commande une conduite (40) qui va d'un cylindre de frein principal (10) raccordé au bloc hydraulique (16) à un frein de roue (12) également raccordé et **en ce que** la deuxième soupape (26) commande un canal (46) qui va du cylindre de frein principal (10) à un côté d'aspiration de la pompe (32).

3. Système de freinage hydraulique selon la revendication 1 ou 2, **caractérisé en ce que** les premier et deuxième espaces de montage (98, 100) des soupapes (20, 26) sont orientés parallèlement l'un à l'autre et sont disposés approximativement à la même hauteur sur le bloc hydraulique (16) en une rangée (66).

4. Système de freinage hydraulique selon l'une quelconque des revendications 1 à 3, **caractérisé en ce que** les canaux (90) et (96) s'étendent essentiellement perpendiculairement l'un à l'autre.

5. Système de freinage hydraulique selon la revendication 4, **caractérisé en ce que** le canal (90) s'étend parallèlement à l'axe longitudinal (94) d'un espace de montage (70) pour une pompe (32) et est réalisé sous forme d'alésage borgne.

6. Système de freinage hydraulique selon l'une quelconque des revendications 1 à 5, **caractérisé en ce qu'**un troisième canal (102) est prévu entre le point d'embouchure du canal (96) dans le canal (90) et le point d'embouchure du deuxième espace de montage (100) de la deuxième soupape (26), lequel relie un accumulateur (28) à l'espace de montage (70) de la pompe (32).

7. Système de freinage hydraulique selon l'une quelconque des revendications 1 à 6, **caractérisé en ce que** l'élément de fermeture (120) est pressé à l'intérieur du canal (90).

8. Système de freinage hydraulique selon l'une quelconque des revendications 1 à 7, **caractérisé en ce que** l'élément de fermeture (120) est une broche de section transversale cylindrique.
